# EUROPEAN PATENT APPLICATION

(11) **EP 4 625 560 A1**
(43) Date of publication of application: **01.10.2025**
(21) Application number: 23894220.5
(22) Date of filing: 31.08.2023
(51) Int. Cl.: H01M 8/04313, H01M 8/04694

(54) **ELECTRIC POWER GENERATION PLANNING METHOD FOR FUEL CELL DEVICE, ELECTRIC POWER GENERATION PLANNING DEVICE FOR FUEL CELL DEVICE, AND ELECTRIC POWER GENERATION SYSTEM**

(30) Priority: 21.11.2022 JP 2022185869
(71) Applicant: Panasonic Intellectual Property Management Co., Ltd., Kadoma-shi, Osaka 571-0057 (JP)
(72) Inventor: TANAKA, Yoshikazu, Kadoma-shi, Osaka 571-0057 (JP); ISE, Takehiko, Kadoma-shi, Osaka 571-0057 (JP); YOSHIHARA, Yasumichi, Kadoma-shi, Osaka 571-0057 (JP); KANEKO, Yasushi, Kadoma-shi, Osaka 571-0057 (JP); TAGUCHI, Yoshifumi, Kadoma-shi, Osaka 571-0057 (JP)
(74) Representative: Grünecker Patent- und Rechtsanwälte PartG mbB
(86) International application number: PCT/JP2023/031723
(87) International publication number: WO 2024/111205

(57) **Abstract**

A power generation planning method for a fuel cell device according to the present disclosure includes: receiving a power generation plan for a fuel cell device; storing the received power generation plan for the fuel cell device; and if a next power generation plan is not received and a remaining period of the stored power generation plan is shorter than a predetermined period, using data of the stored power generation plan to add a power generation plan so that the remaining period of the power generation plan is equal to or longer than the predetermined period.

## Description

### Technical Field

The present disclosure relates to a power generation planning method for a fuel cell device, a power generation planning device for a fuel cell device, and a power generation system.

### Background Art

Various proposals have been made heretofore regarding output control of power generation systems. As one such example, PTL 1 discloses a system in which a plurality of power generation devices are divided into scheduled-operation power generation devices and unscheduled-operation power generation devices. Additionally, PTL 1 indicates that, for example, the total of the power output values of the unscheduled-operation power generation devices is calculated by subtracting the total of the power output values of the scheduled-operation power generation devices from the power consumption of load equipment that is fed power by the plurality of power generation devices. PTL 1 also indicates that, for example, the scheduled-operation power generation devices are given operation commands on the basis of prerecorded schedules and power output values, while the unscheduled-operation power generation devices are given operation commands at predetermined time intervals on the basis of the calculated total of the power output values.

### Citation List

### Patent Literature

PTL 1: Japanese Patent No. 4864739

### Summary of Invention

### Technical Problem

As one example, the present disclosure addresses the problem of providing a power generation planning method for a fuel cell device, a power generation planning device for a fuel cell device, and a power generation system with which power generation by a fuel cell device may be planned more appropriately than heretofore.

### Solution to Problem

To solve the above problem, a power generation planning method for a fuel cell device according to one aspect of the present disclosure includes: receiving a power generation plan for a fuel cell device; storing the received power generation plan for the fuel cell device; and if a next power generation plan is not received and a remaining period of the stored power generation plan is shorter than a predetermined period, using data of the stored power generation plan to add a power generation plan so that the remaining period of the power generation plan is equal to or longer than the predetermined period.

Also, a power generation planning device for a fuel cell device according to one aspect of the present disclosure includes: a communicator that receives a power generation plan for a fuel cell device; storage that stores the received power generation plan for the fuel cell device; and a controller that, if a next power generation plan is not received via the communicator and a remaining period of the power generation plan stored in the storage is shorter than a predetermined period, uses data of the power generation plan stored in the storage to add a power generation plan so that the remaining period of the power generation plan is equal to or longer than the predetermined period.

Also, a power generation system according to one aspect of the present disclosure includes: a fuel cell device; and the above power generation planning device for a fuel cell device.

### Advantageous Effects of Invention

A power generation planning method for a fuel cell device, a power generation planning device for a fuel cell device, and a power generation system according to one aspect of the present disclosure exhibit the effect whereby power generation by a fuel cell device may be planned more appropriately than heretofore.

### Brief Description of Drawings

[Fig. 1] Fig. 1 is a diagram illustrating an example of a power generation system according to a first embodiment.
[Fig. 2] Fig. 2 is a flowchart illustrating an example of operations (a power generation planning method) by a power generation planning device in a power generation system according to the first embodiment.
[Fig. 3A] Fig. 3A is a flowchart illustrating an example of operations (a power generation planning method) by a power generation planning device in a power generation system according to a first implementation example of the first embodiment.
[Fig. 3B] Fig. 3B is a diagram for explaining a specific example of operations in step S4A of Fig. 3A.
[Fig. 4A] Fig. 4A is a flowchart illustrating an example of operations (a power generation planning method) by a power generation planning device in a power generation system according to a second implementation example of the first embodiment.
[Fig. 4B] Fig. 4B is a diagram for explaining a specific example of operations in step S4B of Fig. 4A.
[Fig. 5] Fig. 5 is a flowchart illustrating an example of operations (a power generation planning method) by a power generation planning device in a power generation system according to a third implementation example of the first embodiment.
[Fig. 6A] Fig. 6A is a flowchart illustrating an example of operations (a power generation planning method) by a power generation planning device in a power generation system according to a modification of the first embodiment.
[Fig. 6B] Fig. 6B is a diagram for explaining a specific example of operations in step S6 of Fig. 6A.
[Fig. 7] Fig. 7 is a diagram illustrating an example of a power generation system according to a second embodiment.

### Description of Embodiments

PTL 1 does not consider operations by the power generation devices in cases where the period of a power generation plan is shorter than a predetermined period. Thus, the response in cases where the next power generation plan for a power generation device is not received and the remaining period of a power generation plan stored in the storage is shorter than a predetermined period has not been fully considered.

Accordingly, a power generation planning method for a fuel cell device according to a first aspect of the present disclosure includes: receiving a power generation plan for a fuel cell device; storing the received power generation plan for the fuel cell device; and if a next power generation plan is not received and a remaining period of the stored power generation plan is shorter than a predetermined period, using data of the stored power generation plan to add a power generation plan so that the remaining period of the power generation plan is equal to or longer than the predetermined period.

According to the above, the power generation planning method for a fuel cell device according to the present aspect may cause power generation by a fuel cell device to be planned more appropriately than heretofore.

For example, if the next power generation plan for a fuel cell device is not received and the remaining period of a power generation plan stored in the storage is shorter than a predetermined period, power generation by the fuel cell device may be stopped even though power generation would have continued if the next power generation plan had been received. This may cause the fuel cell device to start and stop more than necessary, and possibly lead to decreased service life. However, in the power generation planning method for a fuel cell device according to the present aspect, when the remaining period of the stored power generation plan is shorter than a predetermined period, the stored power generation plan can be used to add a power generation plan so that the remaining period of the power generation plan is equal to or longer than the predetermined period, thereby causing the fuel cell device to operate appropriately for the duration of the predetermined period, as compared to a state in which the remaining period of the power generation plan remains shorter than the predetermined period.

A power generation planning method for a fuel cell device according to a second aspect of the present disclosure may be such that, in the power generation planning method for a fuel cell device according to the first aspect, data of a last unit period of the stored power generation plan is repeated to make the remaining period of the power generation plan be equal to or longer than the predetermined period.

According to the above, in the power generation planning method for a fuel cell device according to the present aspect, even if the next power generation plan for the fuel cell device is not received and the remaining period of a power generation plan stored in the storage is shorter than a predetermined period, the data of the last unit period of the stored power generation plan can be repeated to add a power generation plan so that the remaining period of the power generation plan is equal to or longer than the predetermined period. Thus, in the power generation planning method for a fuel cell device according to the present aspect, the fuel cell device can be caused to operate appropriately for the duration of the predetermined period, as compared to a state in which the remaining period of the power generation plan remains shorter than the predetermined period.

A power generation planning method for a fuel cell device according to a third aspect of the present disclosure may be such that, in the power generation planning method for a fuel cell device according to the first aspect, data of a period corresponding to the difference between the predetermined period and the remaining period is retrieved from the stored power generation plan, and the data is added to make the remaining period of the power generation plan be equal to or longer than the predetermined period.

According to the above, in the power generation planning method for a fuel cell device according to the present aspect, even if the next power generation plan for the fuel cell device is not received and the remaining period of a power generation plan stored in the storage is shorter than a predetermined period, the data of a period corresponding to the difference between the predetermined period and the remaining period can be retrieved from the stored power generation plan, and the data can be added to thereby add a power generation plan so that the remaining period of the power generation plan is equal to or longer than the predetermined period. Thus, in the power generation planning method for a fuel cell device according to the present aspect, the fuel cell device can be caused to operate appropriately for the duration of the predetermined period, as compared to a state in which the remaining period of the power generation plan remains shorter than the predetermined period.

A power generation planning method for a fuel cell device according to a fourth aspect of the present disclosure may include: receiving first information indicating a selection of either the power generation planning method according to the second aspect or the power generation planning method according to the third aspect, wherein either the method of adding a power generation plan according to the second aspect or the method of adding a power generation plan according to the third aspect is executed on the basis of the first information.

According to the above, in the power generation planning method for a fuel cell device according to the present aspect, first information indicating the selection of either the power generation planning method for a fuel cell device according to the second aspect or the power generation planning method for a fuel cell device according to the third aspect can be received, and the fuel cell device can thereby be caused to operate appropriately, as compared to the case of executing a power generation plan for the fuel cell device without receiving such first information.

A power generation planning method for a fuel cell device according to a fifth aspect of the present disclosure may be such that the power generation planning method for a fuel cell device according to any one of the first to fourth aspects further includes: receiving second information indicating not to add the power generation plan, wherein if the second information is received, the power generation plan for the fuel cell device is not added.

According to the above, in the power generation planning method for a fuel cell device according to the present aspect, second information indicating not to add a power generation plan for the fuel cell device can be received, and the fuel cell device can thereby be stopped at an appropriate time, as compared to the case of executing a power generation plan for the fuel cell device without receiving the second information.

A power generation planning device for a fuel cell device according to a sixth aspect of the present disclosure includes: a communicator that receives a power generation plan for a fuel cell device; storage that stores the received power generation plan for the fuel cell device; and a controller that, if a next power generation plan is not received via the communicator and a remaining period of the power generation plan stored in the storage is shorter than a predetermined period, uses data of the power generation plan stored in the storage to add a power generation plan so that the remaining period of the power generation plan is equal to or longer than the predetermined period.

According to such a configuration, the power generation planning device for a fuel cell device according to the present aspect may cause power generation by a fuel cell device to be planned more appropriately than heretofore. Note that the details of the operations and effects exhibited by the power generation planning device for a fuel cell device according to the present aspect are similar to the operations and effects exhibited by the power generation planning method for a fuel cell device according to the first aspect, and therefore a description is omitted.

A power generation system according to a seventh aspect of the present disclosure includes: a fuel cell device; and the power generation planning device for a fuel cell device according to the sixth aspect.

According to such a configuration, the power generation system according to the present aspect may cause power generation by a fuel cell device to be planned more appropriately than heretofore. Note that the details of the operations and effects exhibited by the power generation system according to the present aspect are similar to the operations and effects exhibited by the power generation planning method for a fuel cell device according to the first aspect, and therefore a description is omitted.

Hereinafter, specific examples of the above aspects of the present disclosure are described with reference to the attached drawings.
The specific examples described below all illustrate examples of the above aspects of the present disclosure. It follows that the shapes, numerical values, structural elements, layout positions and connection states of structural elements, and the like indicated below do not limit the scope of the claims, unless stated otherwise in the claims.

Moreover, among the structural elements described below, structural elements that are not described in the independent claim indicating the broadest concept of the present disclosure are described as optional structural elements. Also, in the drawings, a description may be omitted in some cases for portions denoted with the same signs. The drawings are schematic illustrations of each of the structural elements to facilitate understanding, and may not be exact representations in terms of shape, dimensional ratio, and the like.

Furthermore, in the device operations, processes may be reordered and known processes may be added, as necessary.

### (First embodiment)

### [Device configuration]

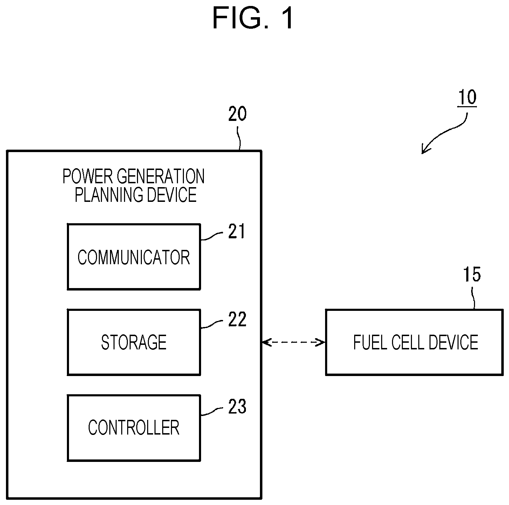

Fig. 1 is a diagram illustrating an example of a power generation system according to a first embodiment.

As illustrated in Fig. 1, the power generation system 10 according to the present embodiment is provided with a fuel cell device 15 and a power generation planning device 20 for the fuel cell device 15. The power generation system 10 may also be a system that supplies bulk power to an electric power system. In this case, the fuel cell device 15 is provided with power generation unit groups formed from a plurality of power generation units including a fuel cell stack. A detailed configuration of such a power generation system 10 is described in the second embodiment.

In the example illustrated in Fig. 1, the power generation planning device 20 is provided with a communicator 21, storage 22, and a controller 23.

The communicator 21 is a receiver that receives a power generation plan for the fuel cell device 15. For example, the communicator 21 may receive the power generation plan as individual unit periods transmitted from a terminal or server through a communication network.

The "unit period" may be about 30 minutes, for example, but is not limited thereto. The "unit period" can be set to an appropriate period on the basis of the configuration of the power generation system 10 and the like.

Note that a user of the terminal or server includes a direct or indirect user of the power generation planning device 20. A direct user of the power generation planning device 20 is an administrator of the power generation planning device 20, for example. An indirect user of the power generation planning device 20 may be the owning entity or the like of the power generation system 10, for example. Such an owning entity may be a consumer receiving a service of supplying electric power generated by the power generation system 10, or a power producer using the power generation system 10 to supply electric power to consumers.

The storage 22 is a memory for storing a power generation plan for the fuel cell device 15 received via the communicator 21.

If the next power generation plan for the fuel cell device 15 is not received from the terminal or server via the communicator 21 and the remaining period of the power generation plan stored in the storage 22 is shorter than a predetermined period, the controller 23 uses the data of the power generation plan stored in the storage 22 to add a power generation plan so that the remaining period of the power generation plan is equal to or longer than the predetermined period.

The "case in which the next power generation plan for the fuel cell device 15 is not received via the communicator 21" is anticipated to be the case where a communication failure occurs on the communication network or the case where an energy management system malfunctions, for example, but is not limited thereto.

The "predetermined period" above may be "three days", for example, but is not limited thereto. The "predetermined period" can be set to an appropriate period on the basis of the configuration of the power generation system 10 and the like.

The controller 23 may be anything with a control function, and is provided with a computational processing unit (not illustrated) and a storage unit storing a control program. Predetermined control is performed in the controller 23 by having the computational processing unit read out and execute the control program stored in the storage unit. One example of the computational processing unit is a microprocessor. One example of the storage unit is a memory.

### [Operations]

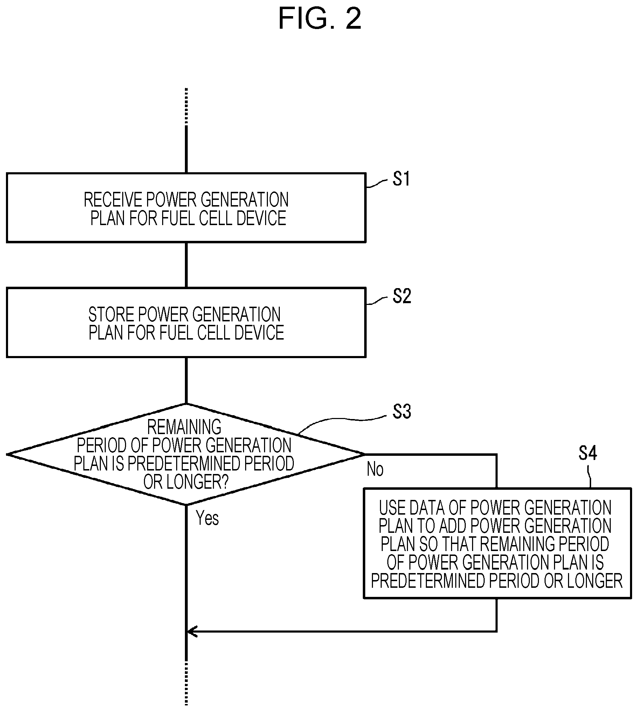

Fig. 2 is a flowchart illustrating an example of operations (a power generation planning method) by a power generation planning device in a power generation system according to the first embodiment. The following operations may be performed by, for example, having the computational processing unit of the controller 23 read out the control program from the storage unit of the controller 23. However, the following operations are necessarily required to be performed by the controller 23. An operator may also perform some of the operations. The following example describes a case in which operations are controlled by the controller 23.

First, when the operations by the power generation planning device 20 start, in step S1, a power generation plan for the fuel cell device 15 is received via the communicator 21. For example, the power generation plan may be received as individual unit periods transmitted from a terminal or server through a communication network.

Next, in step S2, the power generation plan for the fuel cell device 15 received via the communicator 21 is stored in the storage 22.

Next, in step S3, it is determined whether or not the remaining period of the power generation plan stored in the storage 22 is equal to or longer than the predetermined period.

If the remaining period of the power generation plan stored in the storage 22 is equal to or longer than the predetermined period (the "Yes" case in step S3), the operations from step S1 may be re-executed to receive the next power generation plan for the fuel cell device 15 via the communicator 21.

At this point, if the next power generation plan for the fuel cell device 15 is not received via the communicator 21 and the remaining period of the power generation plan stored in the storage 22 is shorter than the predetermined period (the "No" case in step S3), in step S4, a process is performed to use the data of the power generation plan stored in the storage 22 to add a power generation plan so that the remaining period of the power generation plan for the fuel cell device 15 is equal to or longer than the predetermined period.

When the above operations by the power generation planning device 20 end, power is generated by the fuel cell device 15 at an appropriate time on the basis of the power generation plan stored in the storage 22.

Note that a specific processing procedure for executing step S4 may be received and the received processing procedure may be stored in the storage 22, but the configuration is not limited thereto. A specific processing procedure for executing step S4 may also be stored in advance in the storage 22. An example of such a processing procedure is described in an implementation example.

According to the present embodiment described above, power generation by the fuel cell device 15 may be planned more appropriately than heretofore.

For example, if the next power generation plan for the fuel cell device 15 is not received and the remaining period of a power generation plan stored in the storage 22 is shorter than the predetermined period, power generation by the fuel cell device 15 may be stopped even though power generation would have continued if the next power generation plan had been received. This may cause the fuel cell device 15 to start and stop more than necessary, and possibly lead to decreased service life.

However, according to the present embodiment, when the remaining period of the power generation plan stored in the storage 22 is shorter than the predetermined period, the power generation plan stored in the storage 22 can be used to add a power generation plan so that the remaining period of the power generation plan is equal to or longer than the predetermined period, thereby causing the fuel cell device 15 to operate appropriately for the duration of the predetermined period, as compared to a state in which the remaining period of the power generation plan remains shorter than the predetermined period.

### (First implementation example)

The power generation system 10 in a first implementation example of the first embodiment is similar to the power generation system 10 of the first embodiment except for specifics of the control by the controller 23 described below.

If the next power generation plan for the fuel cell device 15 is not received via the communicator 21 and the remaining period of the power generation plan stored in the storage 22 is shorter than a predetermined period, the controller 23 performs control whereby the data of the last unit period of the stored power generation plan is repeated to make the remaining period of the power generation plan be equal to or longer than the predetermined period.

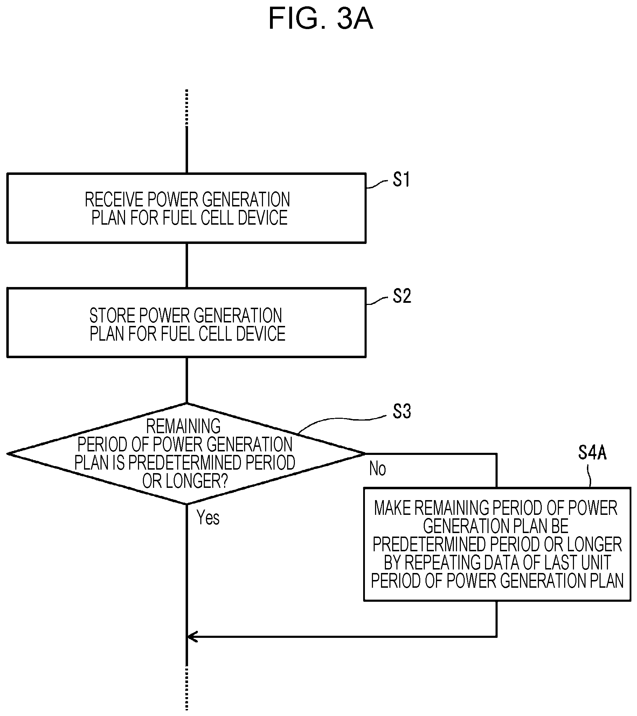

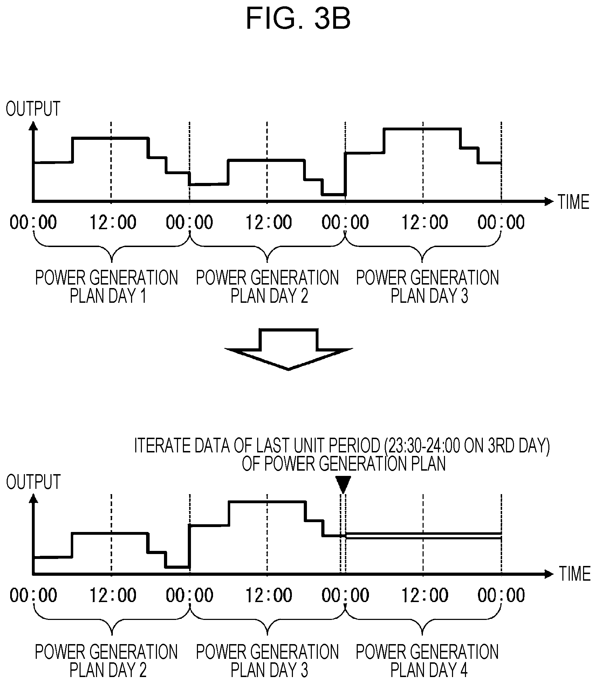

Fig. 3A is a flowchart illustrating an example of operations (a power generation planning method) by a power generation planning device in a power generation system according to a first implementation example of the first embodiment. Fig. 3B is a diagram for explaining a specific example of operations in step S4A of Fig. 3A.

The following operations may be performed by, for example, having the computational processing unit of the controller 23 read out the control program from the storage unit of the controller 23. However, the following operations are necessarily required to be performed by the controller 23. An operator may also perform some of the operations. The following example describes a case in which operations are controlled by the controller 23.

Note that step S1, step S2, and step S3 of Fig. 3A are respectively similar to step S1, step S2, and step S3 of Fig. 2, and therefore a detailed description is omitted. Step S4A of Fig. 3A corresponds to a specific example of a processing procedure for adding a power generation plan for the fuel cell device 15.

If the next power generation plan for the fuel cell device 15 is not received via the communicator 21 and the remaining period of the power generation plan stored in the storage 22 is shorter than the predetermined period (the "No" case in step S3), in step S4A, a process is performed to repeat the data of the last unit period of the power generation plan stored in the storage 22 to make the remaining period of the power generation plan be equal to or longer than the predetermined period. For example, in the case where the "predetermined period" is three days and the "unit period" is 30 minutes, if the power generation plan of days 1 to 3 for the fuel cell device 15 is received on the timing of day 1, but the power generation plan of day 4 is not received on the timing of day 2, in the example illustrated in Fig. 3B, the received data of 23:30-24:00 on day 3 is repeated for all unit periods of day 4 to supplement the power generation plan of day 4. With this arrangement, the remaining period of the power generation plan for the fuel cell device 15 can be three days long at the timing of day 2.

According to the present implementation example described above, even if the next power generation plan for the fuel cell device 15 is not received and the remaining period of the power generation plan stored in storage 22 is shorter than the predetermined period, the data of the last unit period of the stored power generation plan can be repeated to add a power generation plan so that the remaining period of the power generation plan is equal to or longer than the predetermined period. Thus, according to the present implementation example, the fuel cell device 15 can be caused to operate appropriately for the duration of the predetermined period, as compared to a state in which the remaining period of the power generation plan remains shorter than the predetermined period.

The power generation planning method for the fuel cell device 15, the power generation planning device 20 for the fuel cell device 15, and the power generation system 10 in the present implementation example may be similar to the first embodiment, except for the above feature.

### (Second implementation example)

The power generation system 10 in a second implementation example of the first embodiment is similar to the power generation system 10 of the first embodiment except for specifics of the control by the controller 23 described below.

If the next power generation plan for the fuel cell device 15 is not received via the communicator 21 and the remaining period of the power generation plan stored in the storage 22 is shorter than a predetermined period, the controller 23 performs control whereby the data of a period corresponding to the difference between the predetermined period and the remaining period is retrieved from the stored power generation plan, and the data is added to thereby make the remaining period of the power generation plan be equal to or longer than the predetermined period.

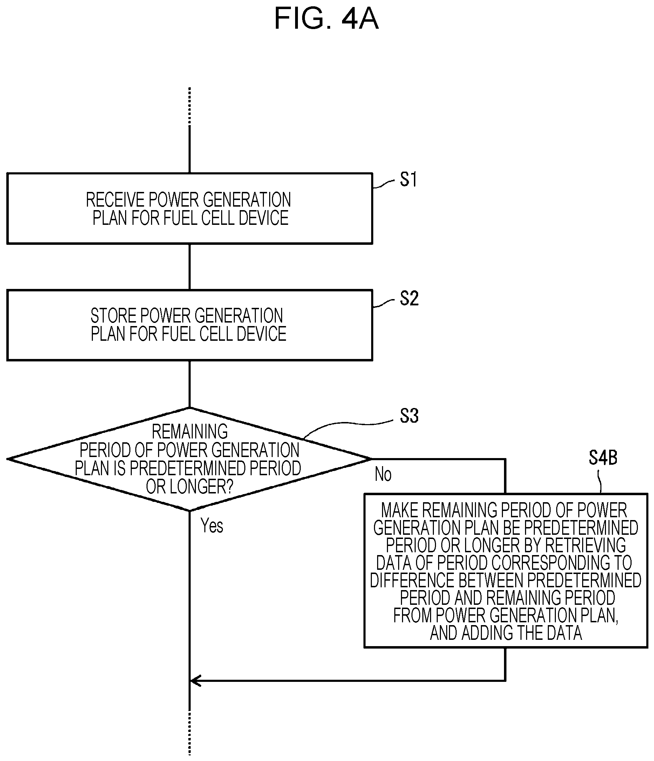

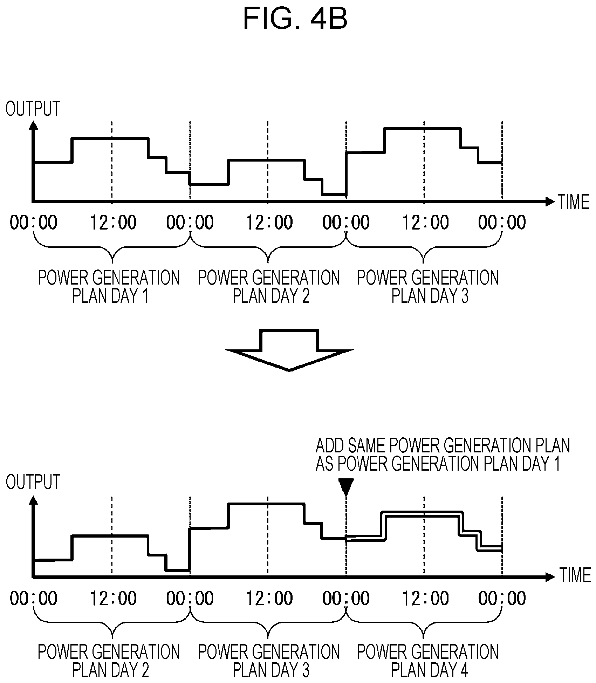

Fig. 4A is a flowchart illustrating an example of operations (a power generation planning method) by a power generation planning device in a power generation system according to a second implementation example of the first embodiment. Fig. 4B is a diagram for explaining a specific example of operations in step S4B of Fig. 4A.

The following operations may be performed by, for example, having the computational processing unit of the controller 23 read out the control program from the storage unit of the controller 23. However, the following operations are necessarily required to be performed by the controller 23. An operator may also perform some of the operations. The following example describes a case in which operations are controlled by the controller 23.

Note that step S1, step S2, and step S3 of Fig. 4A are respectively similar to step S1, step S2, and step S3 of Fig. 2, and therefore a detailed description is omitted. Step S4B of Fig. 4A corresponds to a specific example of a processing procedure for adding a power generation plan for the fuel cell device 15.

If the next power generation plan for the fuel cell device 15 is not received via the communicator 21 and the remaining period of the power generation plan stored in the storage 22 is shorter than the predetermined period (the "No" case in step S3), in step S4B, a process is performed to retrieve the data of a period corresponding to the difference between the predetermined period and the remaining period from the power generation plan stored in the storage 22, and add the data to thereby make the remaining period of the power generation plan be equal to or longer than the predetermined period. For example, in the case where the "predetermined period" is three days, if the power generation plan of days 1 to 3 for the fuel cell device 15 is received on the timing of day 1, but the power generation plan of day 4 is not received on the timing of day 2, in the example illustrated in Fig. 4B, the data of the power generation plan in a period (in this example, day 1) corresponding to the difference between the period of days 1 to 3 and the period of days 2 to 3 is retrieved from the power generation plan of days 1 to 3 for the fuel cell device 15 stored in the storage 22, and this data is added to supplement the power generation plan of day 4. With this arrangement, the remaining period of the power generation plan for the fuel cell device 15 can be three days long at the timing of day 2.

According to the present implementation example described above, even if the next power generation plan for the fuel cell device 15 is not received and the remaining period of a power generation plan stored in the storage 22 is shorter than a predetermined period, the data of a period corresponding to the difference between the predetermined period and the remaining period can be retrieved from the stored power generation plan, and the data can be added to thereby add a power generation plan so that the remaining period of the power generation plan is equal to or longer than the predetermined period. Thus, according to the present implementation example, the fuel cell device 15 can be caused to operate appropriately for the duration of the predetermined period, as compared to a state in which the remaining period of the power generation plan remains shorter than the predetermined period.

The power generation planning method for the fuel cell device 15, the power generation planning device 20 for the fuel cell device 15, and the power generation system 10 in the present implementation example may be similar to the first embodiment or the first implementation example of the first embodiment, except for the above feature.

### (Third implementation example)

The power generation system 10 in a third implementation example of the first embodiment is similar to the power generation system 10 of the first embodiment except for specifics of the control by the controller 23 described below.

The controller 23 receives, via the communicator 21, information indicating the selection of either the power generation planning method for the fuel cell device 15 according to the first implementation example (step S4A of Fig. 3A) or the power generation planning method for the fuel cell device 15 according to the second implementation example (step S4B of Fig. 4A). On the basis of the information, the controller 23 executes either the power generation planning method for the fuel cell device 15 according to the first implementation example (step S4A of Fig. 3A) or the power generation planning method for the fuel cell device 15 according to the second implementation example (step S4B of Fig. 4A).

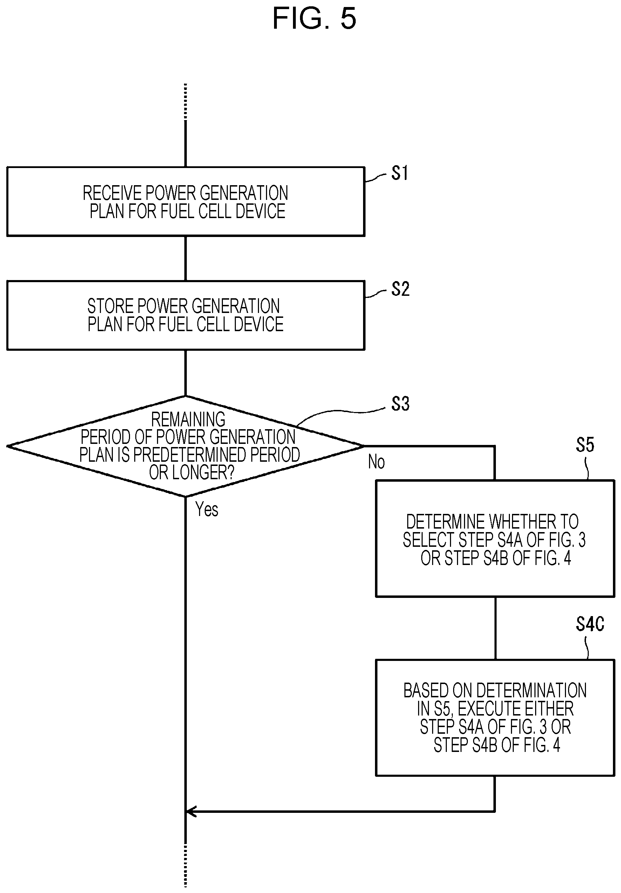

Fig. 5 is a flowchart illustrating an example of operations (a power generation planning method) by a power generation planning device in a power generation system according to a third implementation example of the first embodiment.

The following operations may be performed by, for example, having the computational processing unit of the controller 23 read out the control program from the storage unit of the controller 23. However, the following operations are necessarily required to be performed by the controller 23. An operator may also perform some of the operations. The following example describes a case in which operations are controlled by the controller 23.

Note that step S1, step S2, and step S3 of Fig. 5 are respectively similar to step S1, step S2, and step S3 of Fig. 2, and therefore a detailed description is omitted. Step S4C of Fig. 5 corresponds to a specific example of a processing procedure for adding a power generation plan for the fuel cell device 15.

If the next power generation plan for the fuel cell device 15 is not received via the communicator 21 and the remaining period of the power generation plan stored in the storage 22 is shorter than the predetermined period (the "No" case in step S3), in step S5, it is determined whether to select the power generation planning method for the fuel cell device 15 according to the first implementation example (step S4A of Fig. 3A) or the power generation planning method for the fuel cell device 15 according to the second implementation example (step S4B of Fig. 4A). Note that information indicating the selection of either the power generation planning method according to the first implementation example or the power generation planning method according to the second implementation example is stored in advance in the storage 22, and therefore the above determination is executed by checking the information. Such information may be transmitted by a terminal or server, similarly to the power generation plan for the fuel cell device 15 in step S1. **In** this situation, the power generation planning method for the fuel cell device 15 according to the first implementation example and the power generation planning method for the fuel cell device 15 according to the second implementation example may be received together with the above information, or such power generation planning methods and the above information may be received at separate timings. **In** step S4C, on the basis of the determination in step S5, either the power generation planning method for the fuel cell device 15 according to the first implementation example (step S4A of Fig. 3A) or the power generation planning method for the fuel cell device 15 according to the second implementation example (step S4B of Fig. 4A) is executed.

According to the present implementation example described above, information indicating the selection of either the power generation planning method for the fuel cell device 15 according to the first implementation example or the power generation planning method for the fuel cell device 15 according to the second implementation example can be received, and the fuel cell device 15 can thereby be caused to operate appropriately, as compared to the case of executing a power generation plan for the fuel cell device 15 without receiving such information.

The power generation planning method for the fuel cell device 15, the power generation planning device 20 for the fuel cell device 15, and the power generation system 10 in the present implementation example may be similar to the first embodiment or the first and second implementation examples of the first embodiment, except for the above feature.

### (Modification)

The power generation system 10 in a modification of the first embodiment is similar to the power generation system 10 of the first embodiment except for specifics of the control by the controller 23 described below.

The controller 23 receives, via the communicator 21, information indicating not to add a power generation plan for the fuel cell device 15. Additionally, upon receiving the information, the controller 23 performs control to not add a power generation plan for the fuel cell device 15.

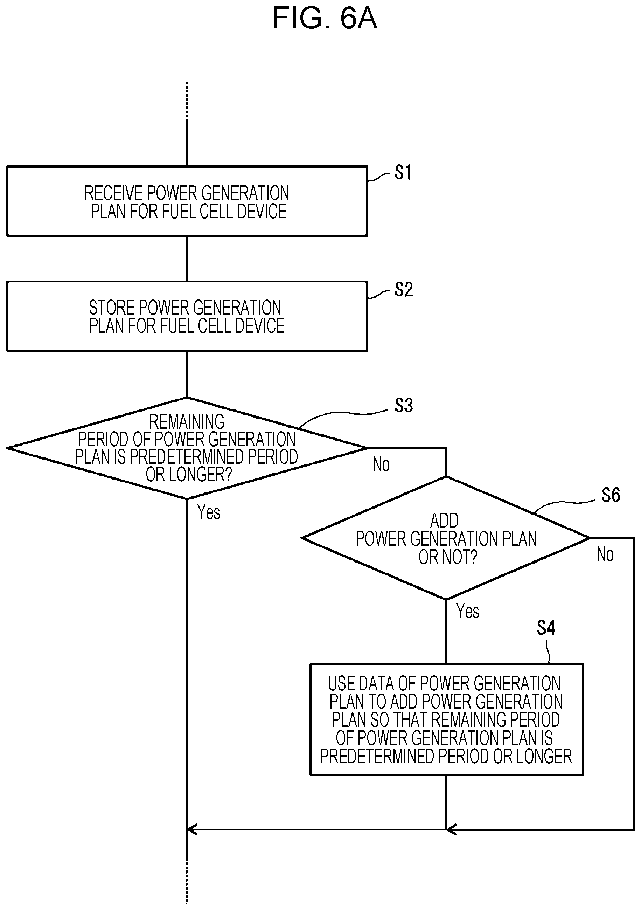

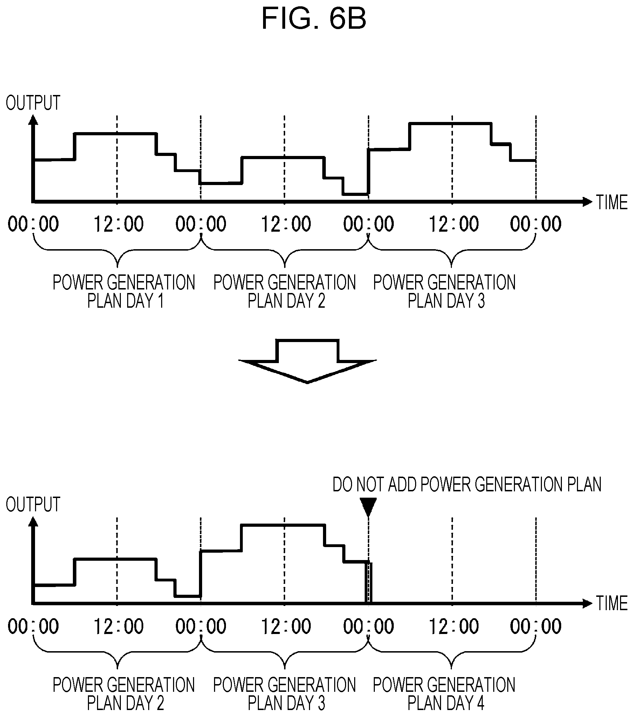

Fig. 6A is a flowchart illustrating an example of operations (a power generation planning method) by a power generation planning device in a power generation system according to the modification of the first embodiment. Fig. 6B is a diagram for explaining a specific example of operations in step S6 of Fig. 6A.

The following operations may be performed by, for example, having the computational processing unit of the controller 23 read out the control program from the storage unit of the controller 23. However, the following operations are necessarily required to be performed by the controller 23. An operator may also perform some of the operations. The following example describes a case in which operations are controlled by the controller 23.

Note that step S1, step S2, step S3, and step S4 of Fig. 6A are respectively similar to step S1, step S2, step S3, and step S4 of Fig. 2, and therefore a detailed description is omitted.

If the next power generation plan for the fuel cell device 15 is not received via the communicator 21 and the remaining period of the power generation plan stored in the storage 22 is shorter than the predetermined period (the "No" case in step S3), in step S6, it is determined whether to add a power generation plan for the fuel cell device 15 or not. Note that the above determination is executed according to whether or not information indicating not to add a power generation plan is stored in the storage 22. Such information may be transmitted from a terminal or server, similarly to the power generation plan for the fuel cell device 15 in step S1. In this situation, a power generation plan for the fuel cell device 15 may be received together with the above information, or such a power generation plan and the above information may be received at separate timings.

If it is determined not to add a power generation plan for the fuel cell device 15 (the "No" case in step S6), the process in step S4 is bypassed. In other words, a power generation plan for the fuel cell device 15 is not added. For example, in the case where the "predetermined period" is three days, even if the power generation plan of days 1 to 3 for the fuel cell device 15 is received on the timing of day 1, but the power generation plan of day 4 is not received on the timing of day 2, in the example illustrated in Fig. 6B, the power generation plan of day 4 is not supplemented. Thus, in this case, the fuel cell device 15 stops generating power at the timing of the start of the first unit period on day 4 in the power generation plan for the fuel cell device 15.

According to the present modification described above, information indicating not to add a power generation plan for the fuel cell device 15 can be received, and the fuel cell device 15 can thereby be stopped at an appropriate time, as compared to the case of executing a power generation plan for the fuel cell device 15 without receiving such information.

The power generation planning method for the fuel cell device 15, the power generation planning device 20 for the fuel cell device 15, and the power generation system 10 in the present modification may be similar to the first embodiment or the first to third implementation examples of the first embodiment, except for the above feature.

### (Second embodiment)

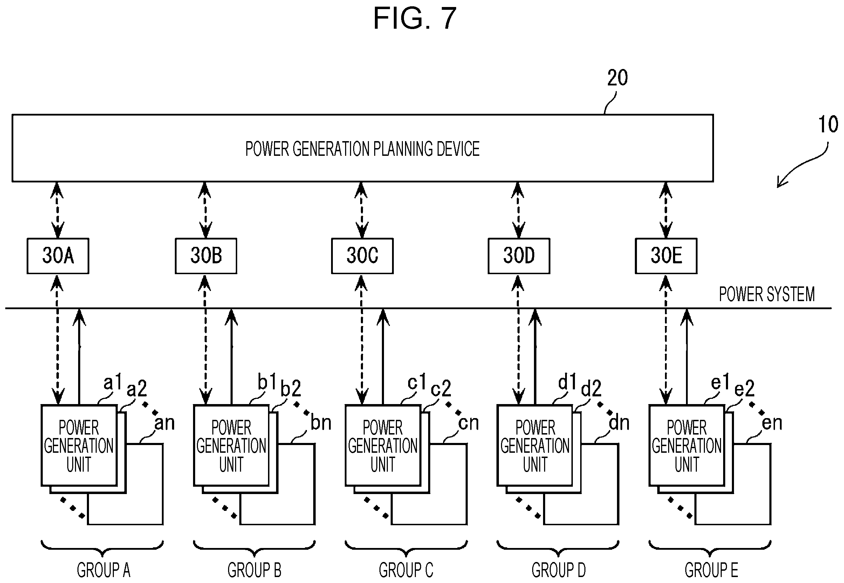

Fig. 7 is a diagram illustrating an example of a power generation system according to a second embodiment.

As illustrated in Fig. 7, the power generation system 10 according to the present embodiment is provided with the fuel cell device 15 (see Fig. 1), the power generation planning device 20 for the fuel cell device 15, and control devices 30A to 30E.

Since the configuration in the power generation planning device 20 is similar to the first embodiment, a detailed description is omitted here.

In the example illustrated in Fig. 7, the power generation system 10 is provided with power generation unit groups formed from a plurality of power generation units including a fuel cell stack. The power generation unit groups are grouped by pluralities of power generation units. Note that, although omitted from illustration, each of these power generation units includes a fuel cell stack, a power conditioner for converting DC power generated by the fuel cell stack into AC power for output to an electric power system, a control device that controls operations by the above equipment, and the like.

In this example, the power generation unit groups are grouped into power generation units a1 to an belonging to a group A, power generation units b1 to bn belonging to a group B, power generation units c1 to cn belonging to a group C, power generation units d1 to dn belonging to a group D, and power generation units e1 to en belonging to a group E. All of the power generation units belonging to a single group are also simply called the "power generation units in a group". Note that in this example, each group corresponds to the fuel cell device of the present disclosure.

However, the configuration of the power generation unit groups above is an illustrative example, and the configuration is not limited to this example. For example, the power generation unit groups may also be grouped as a single group of power generation units.

The control devices 30A to 30E are provided in correspondence with the power generation units a1 to an belonging to the group A, the power generation units b1 to bn belonging to the group B, the power generation units c1 to cn belonging to the group C, the power generation units d1 to dn belonging to the group D, and the power generation units e1 to en belonging to the group E, respectively, and control operations by each of the power generation units in a group.

For example, the control device 30A controls the output of each of the power generation units a1 to an belonging to the group A via a communication network to enable efficient operations by (for example, optimize the service life of) the power generation units a1 to an.

The control devices 30A to 30E may be anything with a control function, and are provided with a computational processing unit (not illustrated), a storage unit storing a control program, and a communicator. Predetermined control is performed in the control devices 30A to 30E by having the computational processing unit read out and execute the control program stored in the storage unit. One example of the computational processing unit is a microprocessor. One example of the storage unit is a memory.

The power generation planning device 20 instructs each of the control devices 30A to 30E with various information, such as a power generation plan for each group, via a communication network, in response to an output request by an external user, for example. Each of the control devices 30A to 30E adjusts the number of power generation units to generate power among the plurality of power generation units belonging to each group according to the power generation output in the received power generation plan.

The operations and effects exhibited by the power generation system 10 according to the present embodiment are similar to the operations and effects described in any of the first embodiment, the first to third implementation examples of the first embodiment, and the modification of the first embodiment, and therefore a description is omitted.

The configuration of the power generation system 10 above is an illustrative example, and the configuration is not limited to this example. For example, the controller 23 (see Fig. 1) of the power generation planning device 20 may also control operations by each of the power generation units in a group directly, without going through the control devices 30A to 30E.

The first embodiment, the first to third implementation examples of the first embodiment, the modification of the first embodiment, and the second embodiment may be combined with each other insofar as one does not preclude the other. Many improvements and other embodiments of the present disclosure will be apparent from the above description to a person skilled in the art. Consequently, the above description should be interpreted only as an illustrative example, and is provided for the purpose of instructing a person skilled in the art as to be best manner in which to reduce the present disclosure to practice. Details of the structure and/or function of the present disclosure can be changed substantially without departing from the spirit thereof.

### Industrial Applicability

In one aspect, the present disclosure can be used for a power generation planning method for a fuel cell device, a power generation planning device for a fuel cell device, and a power generation system with which power generation by a fuel cell device may be planned more appropriately than heretofore.

### Reference Signs List

10 power generation system
15 fuel cell device
20 power generation planning device
21 communicator
22 storage
23 controller
30A control device
30B control device
30C control device
30D control device
30e control device
a1 to an power generation unit
b1 to bn power generation unit
c1 to cn power generation unit
d1 to dn power generation unit
e1 to en power generation unit

## Claims

1. A power generation planning method for a fuel cell device, the method comprising:
receiving a power generation plan for a fuel cell device;
storing the received power generation plan for the fuel cell device; and
if a next power generation plan is not received and a remaining period of the stored power generation plan is shorter than a predetermined period, using data of the stored power generation plan to add a power generation plan so that the remaining period of the power generation plan is equal to or longer than the predetermined period.

2. The power generation planning method for a fuel cell device according to claim 1, wherein
data of a last unit period of the stored power generation plan is repeated to make the remaining period of the power generation plan be equal to or longer than the predetermined period.

3. The power generation planning method for a fuel cell device according to claim 1, wherein
data of a period corresponding to the difference between the predetermined period and the remaining period is retrieved from the stored power generation plan, and the data is added to make the remaining period of the power generation plan be equal to or longer than the predetermined period.

4. A power generation planning method for a fuel cell device, the method comprising:
receiving first information indicating a selection of either the power generation planning method according to claim 2 or the power generation planning method according to claim 3, wherein
either the method of adding a power generation plan according to claim 2 or the method of adding a power generation plan according to claim 3 is executed on the basis of the first information.

5. The power generation planning method for a fuel cell device according to any one of claims 1 to 4, the method further comprising:
receiving second information indicating not to add the power generation plan, wherein
if the second information is received, the power generation plan is not added.

6. A power generation planning device for a fuel cell device, the power generation planning device comprising:
a communicator that receives a power generation plan for a fuel cell device;
storage that stores the received power generation plan for the fuel cell device; and
a controller that, if a next power generation plan is not received via the communicator and a remaining period of the power generation plan stored in the storage is shorter than a predetermined period, uses data of the power generation plan stored in the storage to add a power generation plan so that the remaining period of the power generation plan is equal to or longer than the predetermined period.

7. A power generation system comprising:
a fuel cell device; and
the power generation planning device for a fuel cell device according to claim 6.
